# EUROPEAN PATENT APPLICATION

(11) **EP 2 683 149 A1**
(43) Date of publication of application: **08.01.2014**
(21) Application number: 12174880.0
(22) Date of filing: 04.07.2012
(51) Int. Cl.: H04M 3/533

(54) **A method of telephone and web-based voice communication, and a voice communication system**

(71) Applicant: Lingwar AB, 432 14 Varberg (SE)
(72) Inventor: Lindgren, Håkan, 83130 Phuket (TH)
(74) Representative: Andersson, Per Rune

(57) **Abstract**

A method of phone and web-based voice communication comprises connecting a first user to a voice communication service via a telecommunication network. The first user can then record of a voice message. Further, a second user can connect to the voice communication service via a web-based interface of a computer and record a voice message. The first user can then access the recorded voice message of the second user connected to the voice communication service. The first user can accordingly send a conversation request to the second user. Furthermore, the first user is connected to the second user based on the acceptance of the conversation request by the second user.

## Description

### TECHNICAL FIELD:

The present invention relates to a method, system and computer program product for voice communication among two or more participants.

### BACKGROUND ART:

Systems that enable computer users to chat with other users via internet are generally known. Many online systems allow a user to have "peer-to-peer" chats with another user. The online systems also allow the user to have a group chats with other users.

Further, telephony systems also allow callers to dial up a number and have an conversation with one or more other persons. Such systems are normally used as online systems in which the intention of a caller is to engage in telephone conversation with other users, including the possibility to establish personal, two-party conversations in case there is another person online for the moment which is of particular interest. Such an online service is in contrast to dating services in which an incoming caller may register a personal message serving as an "advertisement" in order for others to take contact with said caller at a later time.

Further, existing online telephone systems do not allow a telephone user to have a conversation or contact with a computer user. Thus, there is need for a better online conversation system which gives more control and flexibility to the users and also allows a user to screen other users before initiating a conversation with another user.

### SUMMARY OF THE INVENTION:

The objective of the invention is to provide a combination of online phone and web-based voice communication which is flexible and easy to use for incoming callers, both telephone users and computer users.

This object is achieved by the method, system and computer program product as set forth in the appended claims.

According to the present invention, the method of phone and web-based communication allows a first user (for example a phone user) and a second user (for example a web-based computer user) to have a personal conversation with each other based on the recorded voice messages of the first user and the second user. Thus, two phone users, two web-based users, or alternatively a phone user and a web-based user can initiate personal conversations with each other without the need for a separate voice communication service for phone users and a separate voice communications service for web-based users.

According to one aspect of the invention, the first user can listen to the recorded voice message of the second user to decide if the first user wants to send a personal conversation request to the second user.

According to another aspect of the invention, the second user can deny the conversation request from the first user if the second user is not interested in conversing with the first user.

In a further aspect of the present invention, the second user can record a voice message in combination with the denial of the conversation request from the first user explaining his/her reasons for rejecting the conversation request.

According to yet another aspect of the present invention, the recorded voice message of the first user is deleted when the first user terminates the call or disconnects from the voice communication system.

According to yet a further aspect of the present invention, the recorded message of a user is stored locally, i.e. it is not deleted, when the connection with the voice communication system is disconnected. In such case, the recorded message is stored locally in the user's own computer, which allows the user to return to the voice communication system again and use the same recorded voice message.

It should be noted that the invention is arranged in the form of an online communication system based on voice communication between two or more parties being connected simultaneously (i.e. being "online") to a voice communication system. The general concept of such an online system is that a telephone caller who is connected to the system starts a session by recording and storing a presentation message of himself/herself. When the session is terminated, i.e. when the caller hangs up and finishes the call, the presentation message is no longer available to other parties which remain online. This is in contrast to the traditional online dating services by means of which a caller may register a presentation message and then finish the call, while the presentation message still remains available to other callers of the service. Other callers which are interested in having more contact with the caller who left a presentation message can then contact the first caller in some suitable way, for example via email.

Additionally, it should be noted that the present invention allows both telephone users and computer users to be online on the voice communication system at the same time, which renders the system more flexible and useful than previously known systems.

### BRIEF DESCRIPTION OF DRAWINGS:

The invention will now be further disclosed and the advantages of the present invention will become readily apparent to those skilled in the art through the following detailed description of the accompanying drawings.
Figure 1 is an exemplary environment in which the present invention can be practiced, in accordance with an embodiment of the invention;
Figure 2 is a block diagram illustrating a voice communication module, in accordance with an embodiment of the invention;
Figures 3A and 3B are a flowchart illustrating steps for voice communication, in accordance with an embodiment of the invention;
Figures 4A and 4B are a flowchart illustrating steps for voice communication, in accordance with another embodiment of the invention; and
Figure 5 is a flowchart describing the invention from a functional perspective.

### DETAILED DESCRIPTION OF PREFERRED EMBODIMENTS:

The figures are schematic and simplified for clarity and merely show details essential for understanding the invention. Throughout the disclosure the same reference numerals have been used to represent identical or corresponding parts.

The terms "phone", "telephone" and "mobile phone" are used interchangeably throughout the patent application. The terms "web", "internet", "web-based" and "internet-based" are also used interchangeably through the patent application.

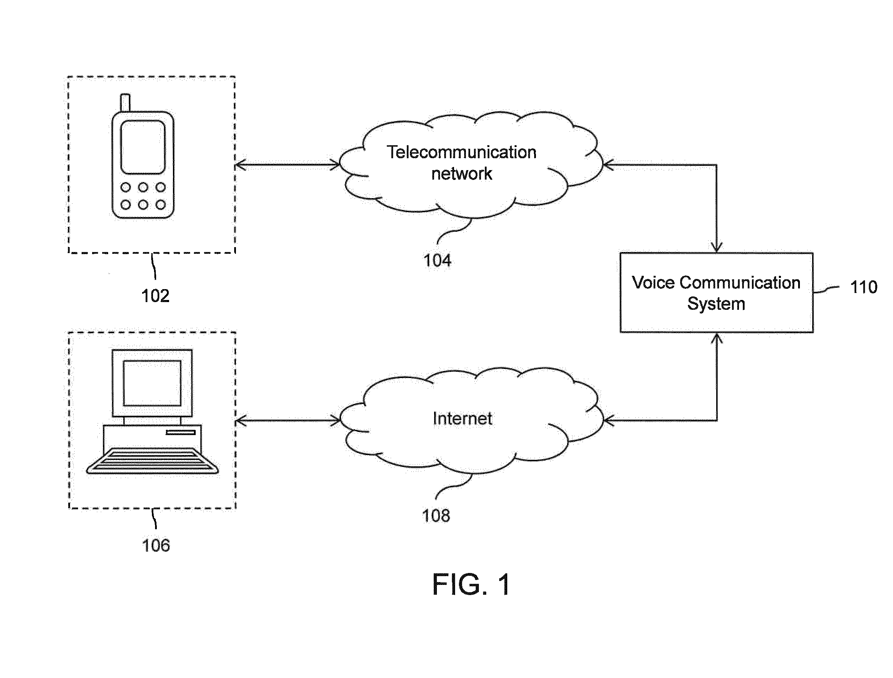

Figure 1 is an exemplary environment in which the present invention can be practiced, in accordance with an embodiment of the invention. The figure shows a first user 102 using a mobile phone to connect to the voice communication system 110. The mobile phone connects to the voice communication system 110 using a telecommunication network 104. The telecommunication network 104 may be a public switched telephone network (PSTN), a mobile network such as Global System for Mobile Communications (GSM) and other suitable implementations.

It should be noted that the invention can be used both in connection with mobile telephones and fixed, i.e. cable-based telephones.

Figure 1 also shows a second user 106 accessing a computer to connect to the voice communication system 110. The computer connects to the voice communication system 110 using the internet 108.

It should be noted that Figure 1 is only for exemplary purposes and many more users may be simultaneously connected to the voice communication system 110 at any given point of time.

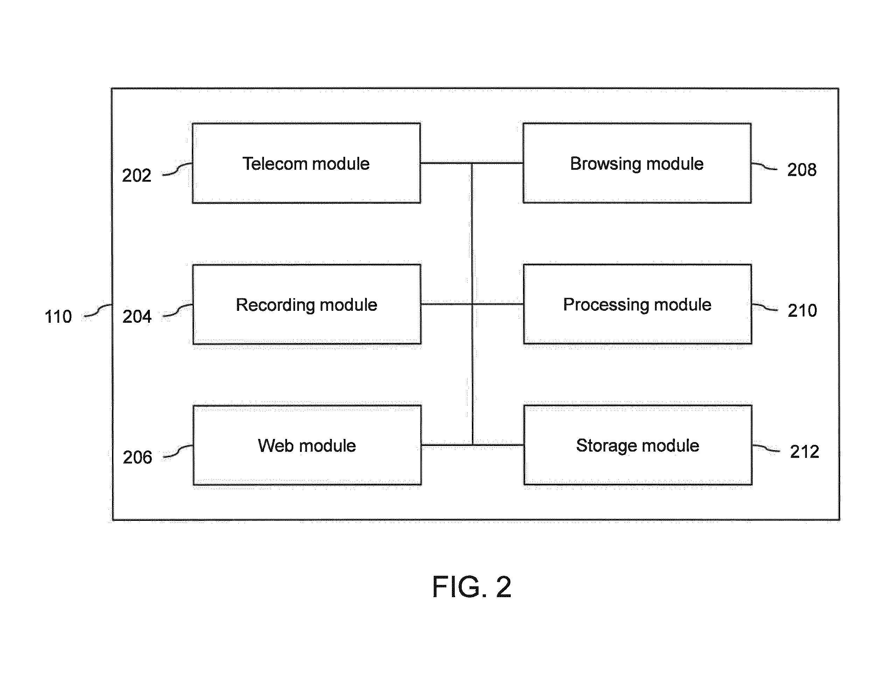

Figure 2 is a block diagram illustrating voice communication system 110, in accordance with an embodiment of the invention. The voice communication system 110 may be a computer server; with computer programs running on the computer server, which can serve the various requests received from different users by performing computational tasks associated with each request. The voice communication system 110 is connected to both the telecommunication network 104 and the internet 108 (see Fig. 1) thereby allowing both mobile phone users as well as computer users to connect to it. Typical examples of voice communication systems 110 include a computer server with a voice communication service such as Voice over Internet Protocol (VoIP) for handling connection requests from various devices such as mobile phones, computers, laptops, tablet computers and the like. It may be apparent to any person skilled in the art that other known voice communication services may also be deployed in the voice communication system 110.

The voice communication system 110 comprises a telecom module 202, a recording module 204, a web module 206, a browsing module 208, a processing module 210 and a storage module 212.

The telecom module 202 is used to connect the first user 102 (using a telephone) to the voice communication system 110 via the telecommunication network 104. Similarly, the web module 206 is used to connect the second user 106 (using a computer) to the voice communication system 110 via internet 108.

The recording module 204 is used to record the voice messages of the first user 102 and the second user 106. Further, the recording module 204 may be used to record a picture by the user 106. Such a picture could be captured by means of a camera (not shown in the drawings) which for this purpose can be integrated within a computer or within a mobile device. Additionally, the second user 106 could record a message in the form of a video sequence, also suitably by means of a built-in camera. Such pictures or video messages can be recorded by means of the recording module 204.

The storage module 212 is configured to store voice messages, pictures and video sequences recorded by the user 106, and using the recording module 204.

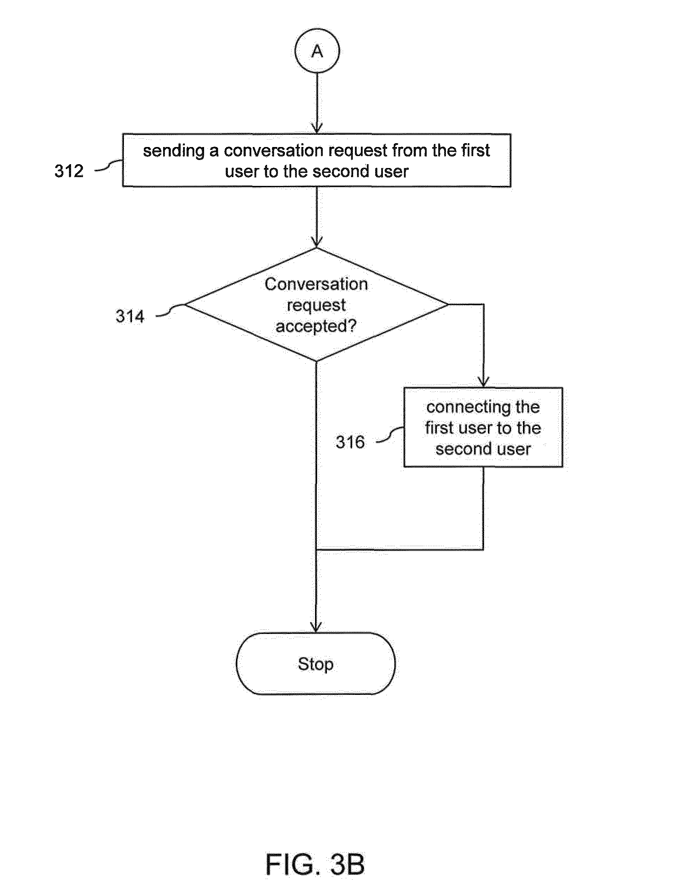

The browsing module 208 allows the first user 102 to play back the messages of the second user 106 as well as any other users. The processing module 210 enables the first user 102 to send a personal message to any other user being online and, in particular, enables the first user 102 to send a conversation request to the second user 106. Such a request for a conversation corresponds to a request for a private, two-party communication between the first user 102 and the second user 106. The processing module 210 is further configured to connect the first user 102 to the second user 106 based on the acceptance of the conversation request by the second user 106. This will be described in greater detail below with reference to Fig. 3B.

A typical example of a processing module 210 includes a programmed microprocessor, a micro-controller, a peripheral integrated circuit element, and other devices or arrangements of devices that are capable of implementing the logic of the present invention. Further, the processing module 210 also stores computer programs or a set of instructions for the suitable operation of the voice communication system 110.

The computer programs or sets of instructions may include various commands that instruct the processing module 210 to perform specific tasks such as the steps that constitute the logic for the present invention. Suitably, the telecom module 202, recording module 204, web module 206, browsing module 208, processing module 210 and storage module 212 of the voice communication system 110 can be implemented in the form of hardware, software, firmware, and/or combinations thereof.

In various embodiments of the invention, the voice communication system 110 utilizes the computational capabilities of a microprocessor of a computational device (not shown in the figure).

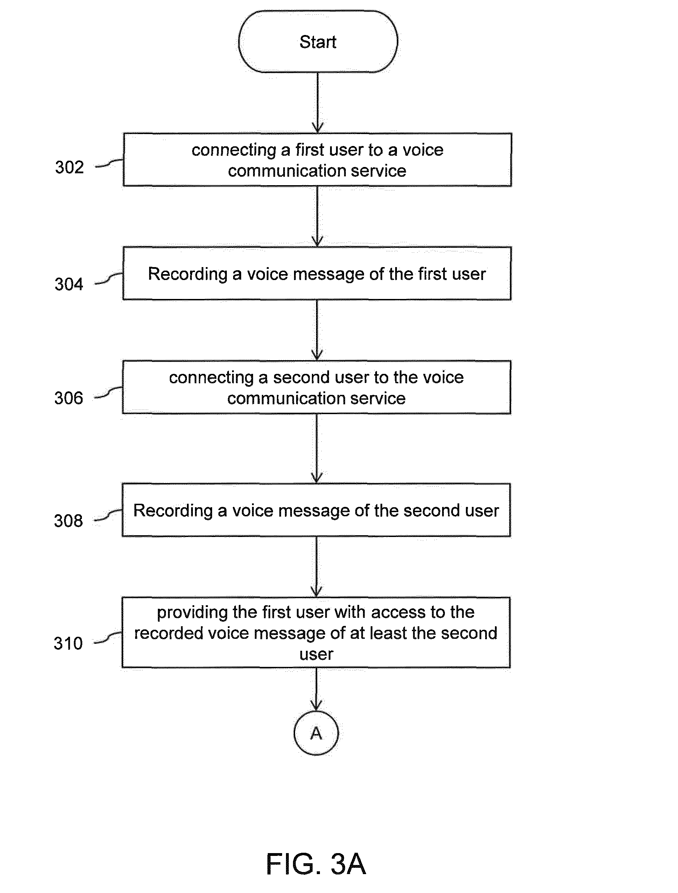

Figures 3A and 3B are a flowchart illustrating steps for voice communication, in accordance with an embodiment of the invention. Figures 3A and 3B are now explained in detail in conjunction with Figure 1 and Figure 2. At step 302, a first user (corresponding to the first user 102 as indicated in Fig. 1) of a plurality of users is connected to the voice communication system 110 (cf. Fig. 1) via the telecommunication network 104. In other words, the first user 102 connects to the voice communication system using a mobile phone or similar device via the telecommunication network.

In accordance with an embodiment of the invention, the first user 102 may be provided with a list of dedicated telephone numbers and he/she may dial one of the dedicated telephone numbers to connect to the voice communication system. In accordance with another embodiment of the invention, the first user may be provided with a mobile application (commonly referred to as "app") which dials and connects to the voice communication system or uses the internet of the mobile phone to connect to the voice communication system.

At step 304, a voice message of the first user 102 is recorded. This voice message serves as a presentation message providing information to the other online users of the first user 102. Once the first user 102 is connected to the voice communication system 110, the first user 102 should record such a personal message to identify himself/herself and describe his/her physical appearance, age, likes and dislikes, hobbies, interests as well as any other information the first user may wish to share.

The recorded voice message of the first user 102 is accessed and played back by other users to decide if any of them is interested by the content of the voice message and would like to initiate an interest-based two-party conversation with the first user.

In accordance with an embodiment of the invention, a welcome message is played to the first user prior to recording of the voice message by the first user.

At step 306, a second user (corresponding to the second user 106 according to Fig. 1) is connected to the voice communication system 110 via a web-based interface of a computer. In other words, the second user 106 connects to the voice communication system using a computer, a laptop, a tablet computer or other similar device connected to the internet 108. In accordance with an embodiment of the invention, the second user uses a website address (url) to connect to the voice communication service. In accordance with another embodiment of the invention, the second user uses a computer application installed in the computer to connect to the voice communication service.

In accordance with an embodiment of the invention, the second user 106 may create a login account at the website address (or computer application) for the voice communication service by filling out a one-time login form and selecting a username and password. This enables the second user to use the same login information for returning to the voice communication service.

At step 308, a voice message, i.e. a presentation message, of the second user 106 is recorded. Similar to the first user, the second user may wish to record a personal presentation message to present, and possibly also identify, himself/herself and describe his/her physical appearance, age, likes and dislikes, hobbies, interests as well as any other information the second user may wish to share. In accordance with an embodiment of the invention, the second user may take his/her own picture using a web camera connected to the computer and attach this picture with the recorded voice message. Further, the second user may directly upload a picture file and attach it with the recorded voice message.

Also, the second user may record a presentation message in the form of a video message identifying himself/herself and describe his/her age, likes and dislikes, hobbies, interests as well as any other information the second user may wish to share.

In accordance with an embodiment of the invention, the second user may use the login account to only record a one-time voice message, a picture or a video message. The second user can thus use the same recorded voice message each time he/she returns to use the voice communication service. Furthermore, the second user 106 may record a number of voice messages (and also capture a number of pictures and/or video messages) to be stored for subsequent use in a suitable manner when connecting to the voice communication system 110. Such stored message can then be stored locally, i.e. in the second user's 106 own computer. Alternatively, said message could be stored in some other location, for example at a central server or at some suitable "cloud" service, thereby preventing other users from having access to said message.

At step 310, the first user 102 is provided access to the recorded voice message of at least the second user 106. In other words, the first user may listen to the recorded voice messages of all users presently connected to the voice communication service. The first user may listen to the recorded voice messages to ascertain the user with whom he/she would like to initiate a personal conversation. In accordance with an embodiment of the invention, the recorded voice messages of all users are played back to the first user in a serial order. At any time during the playback, the first user may press a first button on his mobile phone to indicate his desire to initiate a personal conversation with the user whose recorded voice message is currently being played to the first user.

As long as no request for a personal conversation with another user is initiated, the first user 102 may send a personal message to another user (i.e. without making any conversation request). Such a personal message is sent to a selected user, i.e. it is intended that such a personal message should only be read by said selected user.

In contrast to a presentation message (see above), which is intended to be read by other users being online, a personal message as mentioned above is addressed to a particular person and can only be read by that person.

In accordance with an embodiment of the invention, the recorded voice messages of only the online users are played back to the first user. Online users are users which are connected to the voice communication service at any instant of time.

Suitably, the first user may also skip the playback of the recorded voice message of a user by pressing a second button on his mobile phone. This means that the message currently being played back is stopped and another message from another online user is played back.

In accordance with another embodiment of the invention, the first user may be connected to the voice communication system using a computer. In such an embodiment, the first user also has the ability to browse the pictures or video messages of all users presently connected to the voice communication system.

At step 312, the first user sends a conversation request to the second user. In the context of this invention, a "conversation request" corresponds to a personal, two-party communication line between a first and second user. As described previously, the first user may press a first button on his mobile phone to indicate his/her desire to initiate a personal conversation with the second user.

In accordance with another embodiment of the invention, the first user may be connected to the voice communication system using the computer. In such an embodiment, the first user may click a first icon on the screen to indicate his/her desire to initiate a personal audio conversation with the second user. Further, the first user may click a second icon to indicate his/her desire to initiate a personal video conversation with the second user.

At step 314, the voice communication system checks if the conversation request from first user has been accepted by the second user. If the second user accepts the conversation request, then at step 316, the first user is connected to the second user based on the acceptance of the conversation request by the second user. If the second user does not accept the conversation request, the process terminates.

The first user 102 may choose to exit the voice communication service at any point of time by disconnecting the call on his telephone. In accordance with an embodiment of the invention, the recorded voice message of the first user is deleted by the voice communication service upon disconnection of the mobile phone of the first user. Similarly, the second user 106 may choose to exit the voice communication service by selecting an icon on the screen of his/her computer or by shutting down the computer.

When a particular user exits the voice communication system 110, i.e. either by hanging up the telephone or by disconnecting a computer connection via a web browser, the messages which previously have been uploaded (either in the form of a voice message, a picture or a video sequence) are being deleted from the voice communication system 110, i.e. from the storage module 212 (cf. Fig. 2). In other words, the messages are no longer available to other online users.

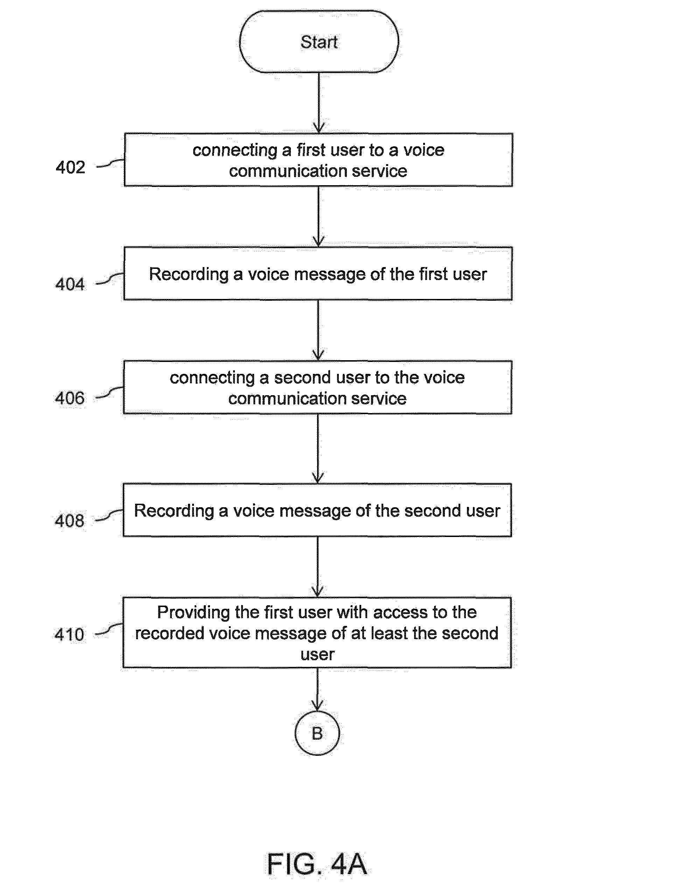

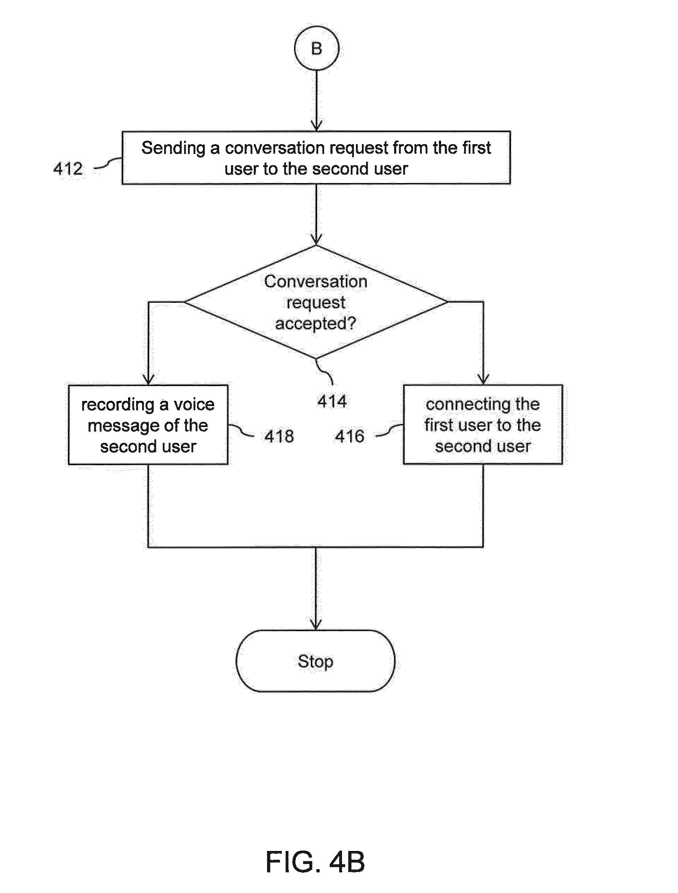

The description above with reference to Figures. 3A and 3B describes a situation in which the second user does not accept a conversation request. In the following, reference is made to Figures 4A and 4B in order to describe a situation in which the second user instead records and sends a return message. Other parts of the description below are generally similar to the description with reference to Figures 3A and 3B.

Consequently, Figures 4A and 4B are a flowchart illustrating steps for voice communication in accordance with another embodiment of the invention. At step 402, a first user of a plurality of users is connected to the voice communication system via the telecommunication network 104. In other words, the first user connects to the voice communication system using a mobile phone or similar device using the telecommunication network. In accordance with the embodiment, the first user may be provided with a list of dedicated telephone numbers and he/she may dial one of the dedicated telephone numbers to connect to the voice communication system.

In accordance with another embodiment, the first user may be provided with a mobile application (commonly referred to as "app") which dials and connects to the voice communication system or uses the 3G internet of the mobile phone to connect to the voice communication system.

At step 404, a voice message of the first user is recorded. Once the first user is connected to the voice communication system, the first user should record a personal presentation message to identify himself/herself and describe his/her physical appearance, age, likes and dislikes, hobbies, interests as well as any other information the first user may wish to share. The recorded voice message of the first user is accessed and played back by other users to decide if any of them is interested by the content of the voice message and would like to initiate an interest-based two-party conversation with the first user.

Preferably, a welcome message is played to the first user prior to recording of the voice message by the first user.

At step 406, a second user is connected to the voice communication system via a web-based interface of a computer. In other words, the second user connects to the voice communication system using a computer, a laptop, a tablet computer or other similar device connected to the internet 108. In accordance with an embodiment of the invention, the second user a website address (url) to connect to the voice communication system. In accordance with another embodiment of the invention, the second user uses a computer application installed in the computer to connect to the voice communication system.

Furthermore, the second user may create a login account at the website address (or computer application) for the voice communication system by filling out a one-time login form and selecting a username and password. This enables the second user to use the same login information for returning to the voice communication system.

At step 408, a voice message of the second user is recorded. Similar to the first user, the second user may wish to record a personal message to identify and/or present himself/herself and describe his/her physical appearance, age, likes and dislikes, hobbies, interests as well as any other information the second user may wish to share. In accordance with an embodiment of the invention, the second user may take his/her own picture using a web-camera connected to the computer and attach this picture with the recorded voice message. Further, the second user may directly upload a picture file and attach it with the recorded voice message. Also, the second user may record a video message identifying himself/herself and describe his/her age, likes and dislikes, hobbies, interests as well as any other information the second user may wish to share.

In accordance with an embodiment of the invention, the second user may use the login account to only record a one-time voice message, a picture or a video message. The second user can thus use the same recorded voice message each time he/she returns to use the voice communication service.

At step 410, the first user is provided access to the recorded voice message of at least the second user. In other words, the first user may listen to the recorded voice messages of the second user and all other users presently connected to the voice communication service. The first user may listen to the recorded voice messages to ascertain the user with whom he/she would like to initiate a personal conversation. In accordance with an embodiment of the invention, the recorded voice messages of all users are played back to the first user in a serial order. At any time during the playback, the first user may press a first button on his mobile phone to indicate his desire to initiate a personal conversation with the user whose recorded voice message is currently being played to the first user.

As long as no request for a personal conversation with another user is initiated, the first user 102 may send a personal message to any other user (i.e. without making any conversation request). Such a personal message is sent to a selected user, i.e. it is intended that such a personal message should only be read by said selected user.

In contrast to a presentation message (see above), which is intended to be read by all other users being online, a personal message as mentioned above is addressed to a particular person and can only be read by that person.

The recorded voice messages of only the online users are played back to the first user. Online users are users which are connected to the voice communication system at any instant of time.

In accordance with an embodiment of the invention, the first user may also skip the playback of the recorded voice message of a user (and go on to listen to the message from a further user) by pressing a second button on his mobile phone.

In accordance with another embodiment of the invention, the first user may be connected to the voice communication system using a computer. In such an embodiment, the first user also has the ability to browse the pictures or video messages of all users presently connected to the voice communication system.

At step 412, the first user sends a conversation request to the second user. As described previously, the first user may press a first button on his mobile phone to indicate his/her desire to initiate a personal conversation with the second user. In accordance with another embodiment of the invention, the first user may be connected to the voice communication system using the computer. In such an embodiment, the first user may click a first icon on the screen to indicate his/her desire to initiate a personal audio conversation with the second user. Further, the first user may click a second icon to indicate his/her desire to initiate a personal video conversation with the second user.

At step 414, the voice communication system determines if the conversation request from first user has been accepted by the second user. If the second user accepts the conversation request, then at step 416, the first user is connected to the second user based on the acceptance of the conversation request by the second user. If the second user does not accept the conversation request, then at step 418, a voice message is recorded by the second user which can then be heard by the first user. Such a message can be recorded by the second user, and then sent to the first user, in case the second user does not wish to accept and enter a private conversation with the first user but still wish to keep the contact with the first user. For example, instead of accepting a conversation request from the first user, the second user may wish to ask some questions or to give some information to the first user. This is done by recording a new message as indicated by reference numeral 418 in Figure 4B.

In accordance with an embodiment of the invention, the second user may record a video message instead of a voice message. In accordance with an embodiment of the invention, the second user may instead proceed to listen to the recorded voice messages of all users presently connected to the voice communication service. The second user may listen to the recorded voice messages to ascertain some other user with whom he/she would like to initiate a personal conversation.

The first user may choose to exit the voice communication service at any point of time by disconnecting the call on his mobile phone. In accordance with an embodiment of the invention, the recorded voice message of the first user is deleted by the voice communication service upon disconnection of the mobile phone of the first user. In accordance with another embodiment of the invention, the recorded voice message of the first user is not deleted by the voice communication service upon disconnection of the mobile phone of the first user. Similarly, the second user may choose to exit the voice communication service by selecting an icon on the screen of his/her computer.

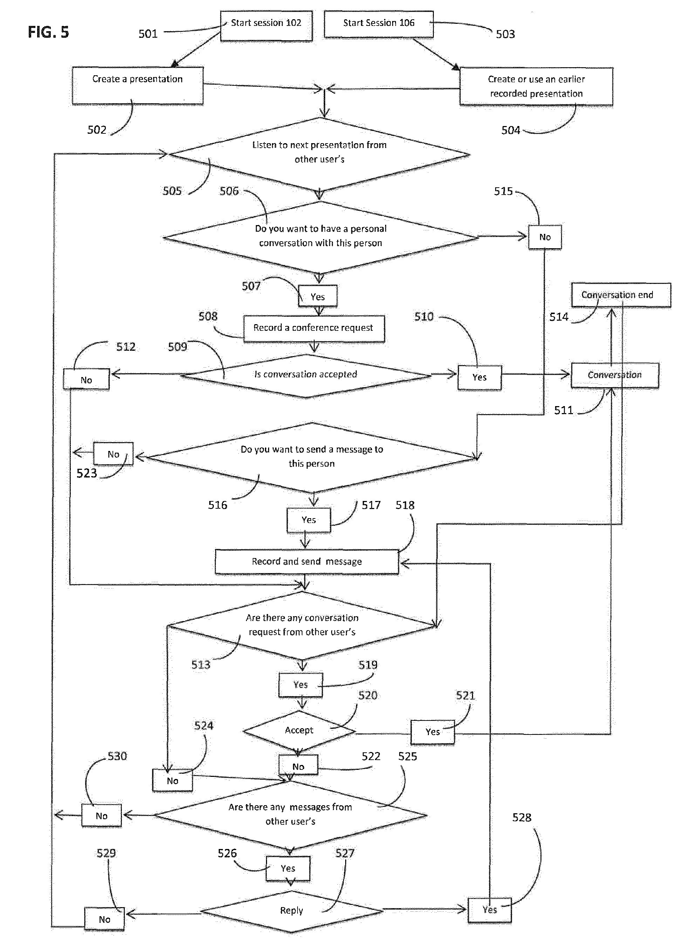

In the following, the invention will be described with reference to Fig. 5, which is a flowchart describing the inventive concept from a user's perspective, i.e. from a more "functional" point of view. Reference is also made to the description above and the appended drawings, in particular as regards the procedure in which the invention is used for establishing a contact between a first user 102 and a second user 106. However, the invention is not limited to being used by two users only, but can be used for connecting a plurality of users.

As indicated in Fig. 5, the method according to the invention is initiated at step 501 when a first user 102 (cf. Fig. 1) connects to the voice communication system 110. In this manner, a session is started. Also, the first user will create a personal presentation (step 502).

Furthermore, as indicated by step 503, the second user 106 starts a session by connecting to the voice communication system 110. The second user will also create a presentation, alternatively use a previously created presentation which for example can be stored in the second user's computer (step 504).

The process according to the invention continues with a step 505 in which the users may listen to other persons' (and each other's) presentations. For example, the first user 102 may first listen to the presentation of a "person A". When that particular presentation is finished, the system will move the presentation of a "person B", and so on. The invention is suitably arranged so that a user, by pressing on a predetermined key on the user's telephone (or computer), may move on to the next person's presentation even though the previous person is not finished.

Assuming that the first user 102 is a telephone user and the second user 106 is a computer user (i.e. a user who is connected to the voice communication system 110 via internet), the first user will listen to other persons' presentation in a particular order. On the other hand, the second user 106 has the possibility of choosing which presentation to listen to, since the second user may have the presentations of other users available through corresponding icons on the second user's computer screen.

Assuming now, for example, that the first user 102 wishes to initiate a private conversation with the second user 106 (steps 506 and 507), the first user 102 records a message and then sends a personal conversation request to the second user (step 508), as described above with reference to Fig. 3B. In such case, the second user 106 (being a computer user) will be immediately notified of such a request. This is suitable done by means of an icon on the computer screen showing the words "You have received a conversation request" or a similar message. The second user may then click that particular icon in order to see which user has sent the conversation request in question, and also to choose whether to accept or reject the conversation request (step 509).

In the event that the second user 106 accepts the conversation request (step 510), the voice communication system will connect the first user 102 exclusively to the second user 106 so that they may enter into a private, personal conversation (step 511).

If the second user rejects the conversation request from the first user (step 512), the voice communication system will continue by checking whether there are any more conversation requests from a further user currenctly being online (step 513). Also, when the personal conversation between the first user and the second user is finished (step 514), the system will also check whether there are any more conversation requests from other users being online (step 513).

Returning now to step 505 in which the users have access to presentations of other users, there may also be a situation in which the first user, for example, does not wish to enter a private conversation (step 515) but instead simply wishes to send a message to a particular person (step 516). If this is the case (step 517), the first user may compose a message (suitably by recording a voice message) which is addressed for example to the second user 106 (step 518). Such a message will be received by the second user. After this step, the system will reach the above-mentioned step 513 in which it is checked whether there has been initiated any conversation request from any other user. If this is the case (step 519), the first user may accept such a request (steps 520 and 521), which means that a private conversation will begin (step 511), as described above, or will alternatively reject it (step 522).

If, at step 516, the user does not wish to send a message to any particular person (step 523), the system will proceed to step 513 in order to check whether there are any requests for a personal conversation with the first user.

With reference to step 513, in which the system checks whether there are any requests for a personal conversation with the first user (step 513), it can be noted that if this is not the case (step 524), the system will proceed to a step 525 in which it is checked whether there are any messages sent from other users to the first user.

Also, if the first user does not accept the incoming request for a personal conversation at step 522, the system will proceed to step 525 in which it is checked whether there are any messages sent from other users to the first user.

If the first user has in fact received a message from any other user being online (step 526), the first user has the option of sending a reply (step 527). If the first user sends a reply (step 528), the system will move to step 518 as described above.

However, if the first user does not send any reply (step 529), the system will move to step 505, as described above, in which the user has the option of listening to the presentations of other persons currently being online.

Also, if first user has not received any message from any other user being online (step 530), the system will also proceed to step 505 in which the user may listen to the presentations of other persons currently being online.

It should be noted that although the description above has been made with reference to a system in which there are only two users 102, 106, the system and method according to the invention is adapted for accommodating many users, either phone users (i.e. users who connect to the system via a phone) or computer users (i.e. users who connect to the system via a computer, alternatively a laptop, tablet computer or similar). Also, it should be noted that the personal conversations which have been described above can be initiated between two phone users, between a phone user and a computer user, or between two computer users. In case that a computer user is connected to the system, a conversation is suitably carried out by using a in-built microphone in the computer. Also, in case two computer users are having a personal conversation, such a conversation can also be in the form of a video conference.

The method, the system, and the computer program product described above have a number of advantages. The method enables two users to have an interest-based conversation with each other. Such an interest-based conversation may help the users in forming friendship or dating or match-matching or general interaction purposes. Since every user has to record a voice message, thereby the voice communication system provides a minimum quality of service by reducing the number of prank-callers, impersonations etc. Furthermore, the novel method allows conversation between two phone users, a phone user and a computer user, two computer users thereby allowing more and more people to interact with each other.

The method and system for phone and web-based voice communication, as described in the present invention, may be embodied in the form of a computer system. Typical examples of a computer system include a general-purpose computer, a programmed microprocessor, a micro-controller, a peripheral integrated circuit element, and other devices or arrangements of devices that are capable of implementing the steps that constitute the method for the present invention.

The computer system typically comprises a computer, an input device, and a display unit. The computer typically comprises a microprocessor, which is connected to a communication bus. The computer also includes a memory, which may include a Random Access Memory (RAM) and a Read Only Memory (ROM). Further, the computer system comprises a storage device, which can be a hard disk drive or a removable storage drive such as a floppy disk drive and an optical disk drive. The storage device can be other similar means for loading computer programs or other instructions into the computer system.

The computer system executes a set of instructions that are stored in one or more storage elements to process input data. These storage elements can also hold data or other information, as desired, and may be in the form of an information source or a physical memory element present in the processing machine. Exemplary storage elements include a hard disk, a DRAM, an SRAM, and an EPROM. The storage element may be external to the computer system and connected to or inserted into the computer, to be downloaded at or prior to the time of use. Examples of such external computer program products are computer-readable storage mediums such as CD-ROMS, Flash chips, and floppy disks.

The set of instructions may include various commands that instruct the processing machine to perform specific tasks such as the steps that constitute the method for the present invention. The set of instructions may be in the form of a software program or a computer readable program code embodying the method in a computer usable medium. The software may be in various forms such as system software or application software. Further, the software may be in the form of a collection of separate programs, a program module with a large program, or a portion of a program module. The software may also include modular programming in the form of object-oriented programming. The software program that contains the set of instructions can be embedded in a computer program product for use with a computer, the computer program product comprising a computer-usable medium with a computer-readable program code embodied therein. The processing of input data by the processing machine may be in response to users' commands, results of previous processing, or a request made by another processing machine.

The modules described herein may include processors and program instructions that are used to implement the functions of the modules described herein. Some or all the functions can be implemented by a state machine that has no stored program instructions, or in one or more Application-Specific Integrated Circuits (ASICs), in which each function or some combinations of some of the functions are implemented as custom logic.

The foregoing is a disclosure of an example practicing the present invention. However, it is apparent that phone and web-based voice communication incorporating modifications and variations will be obvious to one skilled in the art. Inasmuch as the foregoing disclosure is intended to enable one skilled in the art to practice the instant invention, it should not be construed to be limited thereby, but should be construed to include such modifications and variations as fall within the scope of the claims. For instance, the phone and web-based voice communication also allows two users using same platform to have a conversation with each other e.g. two phone users can have a conversation with each other, two computer users can have a conversation with each other.

As will be realised, the invention is capable of modification in various obvious respects, all without departing from the scope of the appended claims. Accordingly, the drawings and the description thereto are to be regarded as illustrative in nature, and not restrictive.

## Claims

1. A method of phone and web-based voice communication, the method comprising:
a. connecting a first user (102) of a plurality of users to a voice communication system (110), the first user (102) being connected to the voice communication system (110) via a telecommunication network (104);
b. recording a voice message of the first user (102);
c. connecting a second user (106) of the plurality of users to the voice communication system (110), the second user (106) being connected to the voice communication system (110) via a web-based interface of a computer;
d. allowing recording a voice message of the second user (106);
e. providing the first user (102) with access to the recorded voice message of at least the second user (106);
f. sending a conversation request from the first user (102) to the second user (106); and
g. connecting the first user (102) to the second user (106) based on the acceptance of the conversation request by the second user (106).

2. A method of phone and web-based voice communication according to claim 1, wherein said conversation request is a request for a two-party personal conversation between the first user (102) and the second user (106).

3. A method of phone and web-based voice communication according to claim 1, further comprising storing the recorded voice message of the first user (102) in the voice communication system (110).

4. A method of phone and web-based voice communication according to claim 1, further comprising storing the recorded voice message of the second user (106) in the voice communication system (110).

5. A method of phone and web-based voice communication according to claim 1, further comprising recording a video message of the second user (106).

6. A method of phone and web-based voice communication according to claim 1, further comprising cancelling the conversation request from the first user based on the rejection of the conversation request by the second user.

7. A method of phone and web-based voice communication according to claim 6, further comprising recording a voice message of the second user based on the cancellation of the conversation request from the first user.

8. A method of phone and web-based voice communication according to claim 1; wherein recording of the voice message by the second user further comprises uploading of a picture by the second user.

9. A method of phone and web-based voice communication according to claim 1 further comprising deleting the recorded voice message of the first user based on the termination of the connection by the first user.

10. A method of phone and web-based voice communication according to claim 1, further comprising storing the recorded message of the second user upon termination of the connection, said message being stored locally in said second user's computer.

11. A voice communication system (110) for phone and web-based voice communication, the voice communication system (110) comprising:
a. a telecom module (202) configured for connecting a first user (102) of a plurality of users to a voice communication service, the first user being connected to the voice communication system (110) via a telecommunication network (104);
b. a recording module (204) configured for recording a voice message of the first user (102);
c. a web module (206) configured for connecting a second user of the plurality of users to the voice communication system (110), the second user (106) being connected to the voice communication system (110) via a web-based interface of a computer;
d. a browsing module (208) configured for providing the first user (102) with access to the recorded voice message of at least the second user (106);
e. a processing module (210) configured for:
i. sending a conversation request from the first user (102) to the second user (106); and
ii. connecting the first user (102) to the second user (106) based on the acceptance of the conversation request by the second user (106).

12. A voice communication system (110) for phone and web-based voice communication according to claim 11; wherein the recording module (204) is further configured for:
a. recording a voice message of the second user (106);
b. recording a video message of the second user (106); and
c. uploading a picture of the second user (106).

13. A voice communication system (110) for phone and web-based voice communication according to claim 11, further comprising a storage module (212) configured for:
a. storing the recorded voice message of the first user; and
b. storing the recorded voice message of the second user.

14. A voice communication system (110) for phone and web-based voice communication according to claim 11; wherein the processing module (210) is further configured for cancelling the connection request from the first user based on the rejection of the conversation request by the second user (106).

15. A voice communication system (110) for phone and web-based voice communication according to claim 14; wherein the recording module (204) is further configured for recording a voice message of the second user based on the cancellation of the conversation request from the first user.

16. A voice communication system (110) for phone and web-based voice communication according to claim 11; wherein the processing module (210) is further configured for deleting the recorded voice message of the first user based on the termination of the connection by the first user.

17. A computer program product for a user with a computer, the computer program product comprising a computer usable medium having a computer readable program code embodied therein for phone and web-based voice communication, the computer readable program code performing:
a. connecting a first user (102) of a plurality of users to a voice communication service, the first user (102) being connected to the voice communication service via a telecommunication network;
b. recording a voice message of the first user (102);
c. connecting a second user (106) of the plurality of users to the voice communication service, the second user (106) being connected to the voice communication service via a web-based interface of a computer;
d. allowing recording a voice message of the second user (106);
e. providing the first user with access to the recorded voice message of at least the second user (106);
f. sending a conversation request from the first user (102) to the second user (106); and
g. connecting the first user (102) to the second user (106) based on the acceptance of the conversation request by the second user (106).

18. A computer program product according to claim 17, wherein the computer readable program code further performs deleting the recorded voice message of the first user based on the termination of the connection by the first user.
